## Europäisches Patentamt
## European Patent Office
## Office européen des brevets

(11) Numéro de publication: **0 271 382 B1**

(12) **FASCICULE DE BREVET EUROPEEN**

(45) Date de publication du fascicule du brevet:
**23.08.89**

(51) Int. Cl.⁴: **F16D 13/71, F16D 13/50**

(21) Numéro de dépôt: **87402554.7**

(22) Date de dépôt: **12.11.87**

(54) Mécanisme d'embrayage à élément de progressivité.

(30) Priorité: **12.11.86 FR 8615685**

(43) Date de publication de la demande:
**15.06.88 Bulletin 88/24**

(45) Mention de la délivrance du brevet:
**23.08.89 Bulletin 89/34**

(84) Etats contractants désignés:
**DE IT**

(56) Documents cités:
**FR-A- 1 392 569**
**FR-A- 2 546 999**
**FR-A- 2 564 546**
**GB-A- 2 177 466**
**US-A- 4 291 792**

(73) Titulaire: **VALEO, 64 Avenue de la Grande Armée, F-75017 Paris(FR)**

(72) Inventeur: **Villata, Gino, Via Moriondo 32, I-14021 Buttigliera d'Asti(IT)**

(74) Mandataire· **Gamonal, Didier, Société VALEO Service Propriété Industrielle 21, rue Blanqui, F-93406 Saint Ouen(FR)**

ACTORUM AG

**Description**

L'invention se rapporte à un embrayage à friction et plus particulièrement à un mécanisme d'embrayage comportant un élément annulaire de progressivité intercalé entre le plateau de pression et un diaphragme d'actionnement prenant appui sur un couvercle et sur le plateau de pression ; elle concerne plus particulièrement un perfectionnement portant sur la forme propre de l'élément de progressivité et sur sa coopération avec le plateau de pression.

Il est connu, dans un embrayage à friction, d'intercaler un élément élastique de progressivité entre le plateau de pression et l'organe d'actionnement dudit embrayage, le plus souvent un diaphragme. Cet élément de progressivité consiste en des lames cambrées, fixées par rivetage à des pattes du plateau de pression susceptibles de s'aplatir élastiquement sous l'action du diaphragme, lors de chaque manoeuvre d'embrayage. Un tel agencement est en particulier décrit dans le brevet FR-A-1392569.

Plus précisément le plateau de pression porte à solidarisation un cordon d'appui rigide à contour globalement circulaire constitué d'une pluralité de segments, formant saillies, espacés le long dudit contour circulaire. Les lames cambrées sont admises, en position embrayée, à s'escamoter entre les segments.

Cependant dans un tel agencement le montage des lames n'est pas aisé du fait, notamment, de leur fixation par rivetage et de leur association par paire. En outre, la charge développée par ces lames n'est pas aussi précise que souhaitée en vue d'une bonne progressivité.

La présente invention a pour objet de pallier ces inconvénients, tout en assurant un bon positionnement et un bon maintien de l'élément de progressivité par rapport au plateau de pression et en procurant d'autres avantages.

Selon l'invention un mécanisme d'embrayage du type sus-indiqué est caractérisé en ce que l'élément de proressivité est conformé en rondelle élastiquement déformable, dans le sens axial, et comporte des découpes dans lesquelles sont engagés lesdits segments, et en ce que le plateau de pression porte des moyens pour stabiliser la rondelle.

Grâce à l'invention le positionnement et le maintien de l'élément de progressivité par rapport au plateau de pression est automatiquement assuré par liaison de forme entre les deux pièces. Le montage est ainsi très aisé et se fait simplement par emboîtement.

On appréciera que la rondelle élastiquement déformable dans le sens axial, c'est-à-dire possédant un profil variant dans le sens axial, peut, dans un mode de réalisation prendre appui, selon les cas, soit sur un épaulement circulaire intérieur ou extérieur du plateau de pression, et offrir un appui au diaphragme, en sorte qu'elle peut avoir une longueur suffisante favorable à une bonne précision de la force qu'elle exerce sur le diaphragme, compte tenu des tolérances de fabrication.

Cet épaulement circulaire constitue donc un moyen pour stabiliser la rondelle.

En outre on notera que la rondelle peut avoir une épaisseur aussi faible que souhaitée en vue d'une bonne progressivité car elle est admise, en position embrayée, à s'escamoter entre les segments d'appui et non à rester intercalée entre le diaphragme et le cordon d'appui comme décrit dans le certificat d'addition FR-86 983 au susmentionné brevet FR-A-1392569.

Enfin on notera qu'il est possible d'équiper un plateau de pression d'un mécanisme d'embrayage existant d'une rondelle selon la présente invention, en usinant par tournage le plateau pour formation de l'épaulement annulaire.

Les découpes précitées peuvent consister, notamment, en des échancrures débouchant le long d'un bord circulaire de la rondelle élastiquement déformable. Ces découpes peuvent aussi consister en des ouvertures à contour fermé dont la forme correspond à celle desdits segments. De cette façon, la rondelle de progressivité est complètement "escamotable" entre les segments du cordon d'appui.

L'invention sera mieux comprise et d'autres avantages de celle-ci apparaîtront plus clairement à la lumière de la description qui va suivre de plusieurs modes de réalisation conformes à son principe donné uniquement à titre d'exemple, et faite en référence aux dessins annexés dans lesquels :

- la figure 1 est une vue partielle en coupe d'un embrayage conforme à l'invention ;
- la figure 2 est une vue partielle en perspective du plateau de pression de la figure 1 portant un élément de progressivité conforme à l'invention ;
- la figure 3 est une vue analogue à la figure 1 représentant une variante ;
- la figure 4 est une vue de détail illustrant une particularité de l'élément de progressivité de la figure 1;
- la figure 5 est une vue de détail montrant une particularité de l'élément de progressivité de la figure 3;
- la figure 6 est une vue analogue à la figure 3 représentant une variante ;
- la figure 7 est une vue partielle du plateau de pression portant une variante de l'élément de progressivité ;
- la figure 8 est une coupe VIII-VIII de la figure 7; et
- la figure 9 illustre une phase de fabrication de l'élément de progressivité de la figure 7.

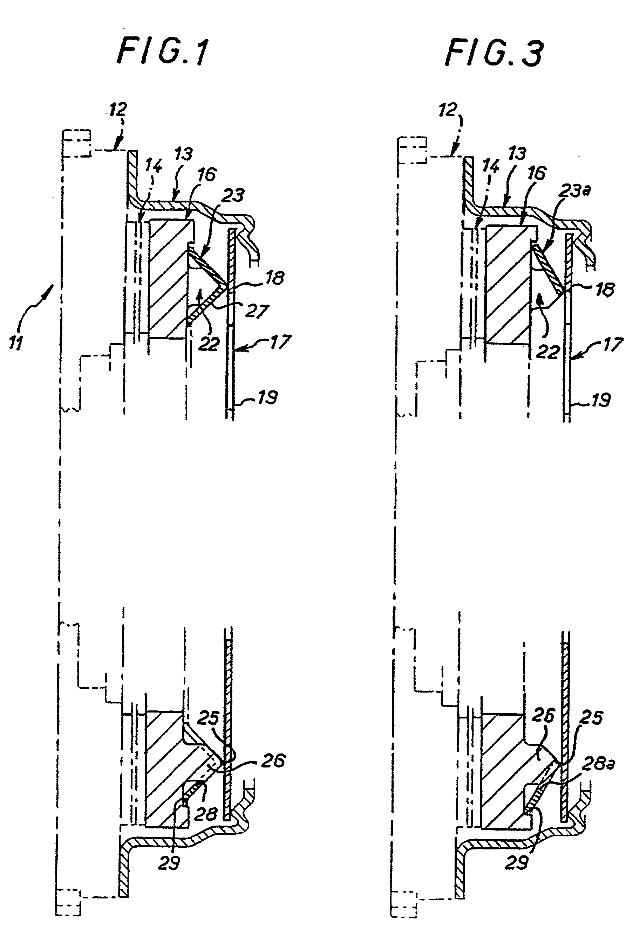

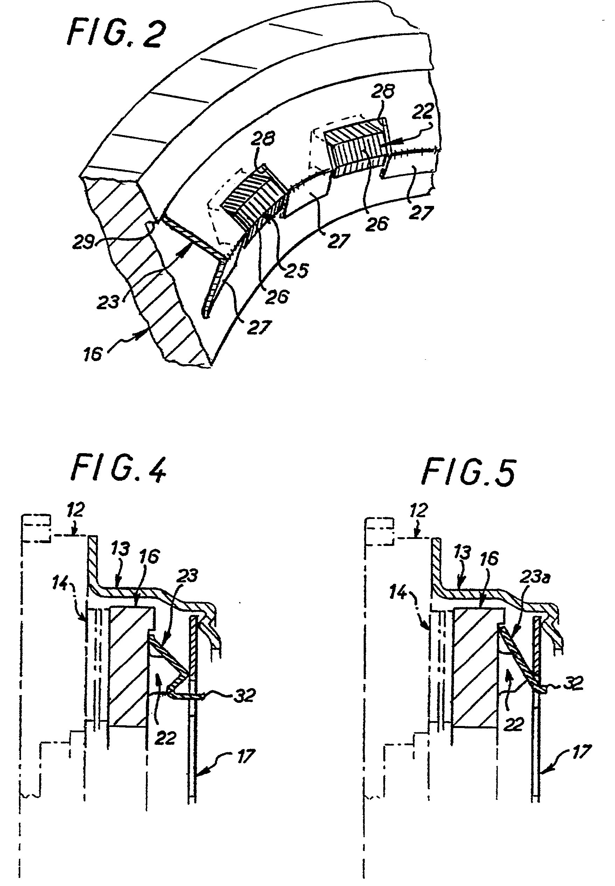

En se référant aux dessins, et plus particulièrement aux figure 1 et 2, on a représenté partiellement un embrayage 11 dont les éléments traditionnels sont successivement un plateau de réaction 12, solidaire en rotation d'un arbre menant tel que par exemple le vilebrequin d'un moteur, une pièce globalement annulaire 13 appelée couvercle, fixée à la périphérie du plateau de réaction grâce à un rebord radial, un disque de friction 14 solidaire en rotation d'un arbre mené tel que l'arbre d'entrée d'une boîte de vitesses et, logés à l'intérieur du couvercle et solidaires en rotation de celui-ci, un plateau de pression 16 et un organe d'actionnement métallique appelé diaphragme 17. Sur les dessins, le plateau de réaction et le disque de friction qui ne sont pas spécifiquement concernés par l'invention sont représentés en trait mixte. Tout ceci est usuel et ne sera pas décrit plus en détail ici, en cas de besoin, par exemple pour la liaison en rotation du plateau de pression avec le couvercle, on pourra se reporter au document FR-A-25 64 546 déposé le 18 mai 1984, qui montre une liaison par languettes tangentielles. En variante, la liaison en rotation avec mobilité axiale peut être réalisée par tenons-mortaises. Le diaphragme 17 comporte une partie annulaire externe 18, en forme de rondelle Belleville, prolongée vers l'intérieur par des doigts radiaux 19, en prise avec une butée d'embrayage (non représentée) mobile axialement. La partie annulaire 18 se déforme sous l'action des doigts en prenant appui extérieurement sur le couvercle et intérieurement sur un cordon d'appui 22 du plateau de pression 16 et sur un élément annulaire de progressivité 23. Le disque de friction 14 est axialement intercalé entre le plateau de réaction 12 et le plateau de pression 16. Il est normalement enserré entre eux en position embrayée et les deux plateaux s'éloignent l'un de l'autre pour le desserrer, à chaque manoeuvre de débrayage. L'ensemble couvercle 13, plateau de pression 16, diaphragme 17, forme un sous-ensemble appelé mécanisme d'embrayage, propre à être fixé sur le plateau de réaction 12 par l'intermédiaire du couvercle 13 au moyen, par exemple, de vis non représentées.

Le cordon d'appui 22, qui a un contour globalement annulaire et présente une arête de contact 25 dirigée vers le diaphragme, est circonférentiellement "discontinu" c'est-à-dire qu'il est formé d'une pluralité de segments 26, formant saillies, espacés le long du contour circulaire définissant la zone de contact entre le plateau de pression et le diaphragme. Ici les segments 26 rigides sont d'un seul tenant avec le plateau 16 en étant venus de moulage. En outre, suivant l'invention, l'élément de progressivité 23 est une rondelle métallique élastiquement déformable dans le sens axial (c'est-à-dire possédant un profil dont la longueur axiale est susceptible de varier) et comporte des découpes, plus particulièrement ici des échancrures 28 conformées et dimensionnées pour que les segments 26 puissent de préférence s'y engager à léger jeu. Cette rondelle peut prendre appui, de manière décrite ci-après, sur un moyen porté par le plateau de pression pour stabiliser la rondelle. La rondelle 23 formant ledit élément de progressivité est telle que, à l'état non contraint, des parties de celle-ci fassent saillie par rapport à l'arête 25, dans la direction dudit diaphragme. Par conséquent, au cours d'une manoeuvre d'embrayage, lors d'un réembrayage, se traduisant par un rapprochement du diaphragme et de l'arête 25, la rondelle 23 se déforme en s'opposant élastiquement au mouvement et joue donc son rôle d'élément de progressivité. Au fur et à mesure de ce mouvement, les zones 27 de la rondelle, qui s'étendent entre les échancrures 28, s'aplatissent dans leurs logements ménagés entre les segments 26, de sorte que, en position embrayée, la rondelle Belleville 18 du diaphragme repose directement sur les segments 26 du cordon d'appui 22. La rondelle 23 aura avantageusement une épaisseur choisie, relativement faible, en vue d'une bonne élasticité car la charge qui lui est transmise est plus faible que dans l'art antérieur. On notera que c'est avec léger jeu circonférentiel que les zones 27 pénètrent entre les segments 27. Comme visible à la figure 1, la forme en V de la rondelle permet, en cas de mouvement de celle-ci par rapport au plateau de pression, un maintien en rotation de celle-ci, notamment en position débrayée, par coopération de forme avec les faces latérales des segments 26, qui s'étendent axialement en ayant une extrémité pointue.

Plusieurs modes de réalisation sont possibles. Ainsi, dans les exemples représentés, les échancrures 28 débouchent le long du bord circulaire interne de la rondelle élastique 23. Elles pourraient déboucher le long du bord circulaire externe ou encore prendre la forme d'ouvertures à contour fermé. Sur la figure 1, en particulier, les zones 27 de la rondelle élastiquement déformable, qui s'étendent entre les échancrures, ont sensiblement un profil en V, la pointe du V étant dirigée vers le diaphragme. La position de la rondelle est stabilisée, pendant sa déformation, en prenant appui sur un épaulement circulaire extérieur 29 du plateau de pression 16.

On notera que la rondelle 23 possède à la périphérie externe un rebord sensiblement radial ; il en est également ainsi pour l'extrémité des zones 27. Ces rebords radiaux, notamment celui des zones 27, évitent des phénomènes d'incrustation nuisibles à une bonne progressivité.

Selon le mode de réalisation de la figure 3, la rondelle élastiquement déformable 23a a globalement la forme d'une rondelle Belleville et les échancrures 28a sont pratiquées le long de son bord interne.

On appréciera que le positionnement et le maintien de l'élément de progressivité par rapport au plateau de pression est automatiquement assuré par les liaisons de forme entre les deux pièces, décrites ci-dessus. En outre, comme le montrent les figures 4 et 5, la rondelle élastique 23 ou 23a peut comporter au moins une patte 32 recourbée dans la direction du diaphragme 17 et engagée dans une ouverture de celui-ci. On obtient ainsi, grâce à un agencement très simple, l'immobilisation en rotation du diaphragme par rapport au plateau de pression.

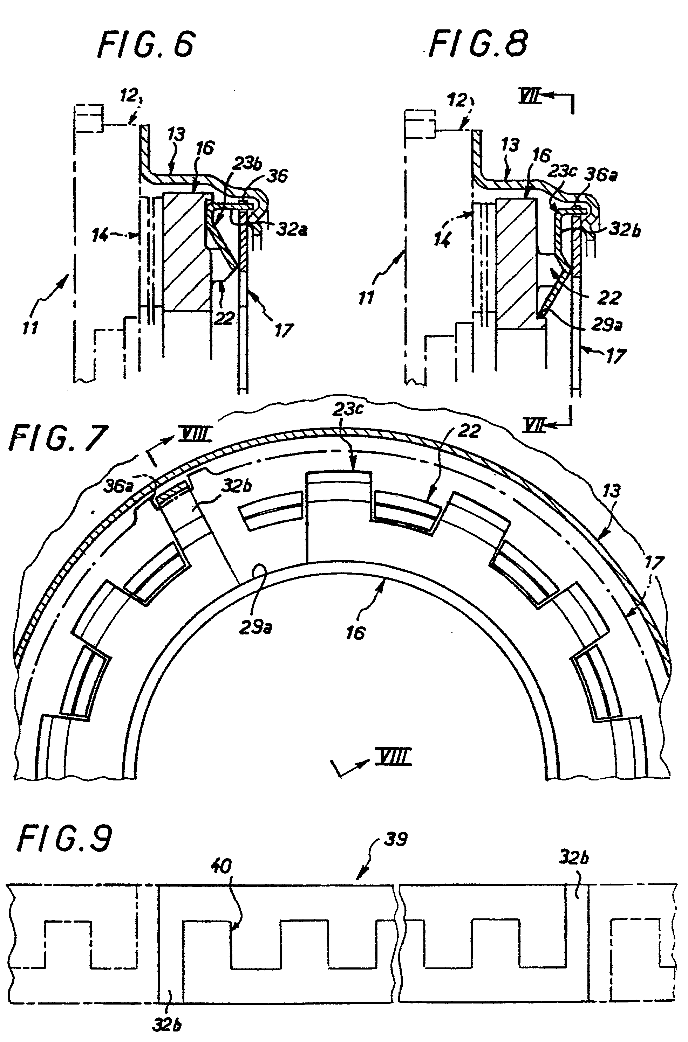

La figure 6 montre une variante du mode de réalisation de la figure 5 dans laquelle au moins une patte 32a est recourbée à partir de la zone d'appui extérieure de la rondelle élastique 23b et s'engage dans une encoche 36 du bord extérieur du diaphragme définie entre deux saillies radiales de celui-ci, assurant ainsi son immobilisation en rotation.

Les figures 7 et 8 montrent le même agencement dans une variante du mode de réalisation de la figure 4 ; la patte 32b étant également recourbée vers une encoche 36a du diaphragme. Dans ce mode de réalisation, la rondelle élastique 23c prend appui pendant sa déformation sur un épaulement circulaire intérieur 29a de stabilisation. En outre, on voit sur la figure 7 que la rondelle élastique 23c n'est pas fermée parce qu'elle travaille en flexion. Elle peut aussi être en plusieurs pièces. Ceci permet en particulier de fabriquer la rondelle élastique en partant d'une bande de tôle 39 rectiligne, par un découpage en forme de grecque 40 tel que représenté à la figure 9. On obtient ainsi deux pièces plates identiques avec la future patte 32*b* à une extrémité. Chaque pièce est ensuite conformée en élément annulaire par déformations succesives jusqu'à obtenir la rondelle élastique des figures 7 et 8. On optimise ainsi l'utilisation de la tôle.

Ainsi qu'il ressort à l'évidence de la description on peut prévoir d'autres moyens pour stabiliser la rondelle, telle qu'une pluralité de bossages portés par le plateau de pression et engagés dans une ouverture de forme oblongue pratiquée dans la partie courante de la rondelle. Par exemple à la figure 1, les bossages, sous forme de têtons, peuvent s'engager à jeu dans des ouvertures fermées circonférentiellement de forme oblongue pratiquées dans la périphérie externe de la rondelle. On peut même prévoir une liaison en rotation par ces bossages au lieu de la liaison par coopération de forme avec les segments 26. Dans ce cas les zones 27 peuvent être moins larges. A la figure 6 on peut profiter de la partie radiale de la rondelle 23*b*, au contact du plateau, pour pratiquer avantageusement dans celle-ci les ouvertures dans lesquelles pénètreront les bossages. Dans ces conditions l'ouverture peut être ouverte vers l'extérieur. Au lieu de bossages on peut prévoir des têtons rapportés.

Bien entendu, l'invention n'est pas seulement applicable à un embrayage de type "tiré" tel que représenté sur les dessins. Son principe est valable aussi pour un embrayage de type "poussé" comme décrit dans le susmentionné brevet FR-A-1392569 ou dans la demande FR-A-2564456. De plus, il est à noter que le diamètre d'appui de la rondelle formant l'élément de progressivité peut être différent du diamètre de l'arête 25, ce qui permet une certaine "standardisation" de l'élément de progressivité.

On notera que de préférence dans un embrayage du type tiré, la rondelle s'appuie sur un épaulement circulaire situé à la périphérie externe du plateau de pression, tandis que pour un embrayage du type poussé c'est l'inverse, la rondelle s'appuyant de préférence sur un épaulement situé à la périphérie interne dudit plateau. Grâce à cette mesure la rondelle peut avoir la longueur maximum ce qui est favorable à une bonne précision de la résistance qu'offre la rondelle au diaphragme.

On appréciera que le montage de le rondelle est aisé et qu'à la figure 8 on peut arrondir l'extrémité de celle-ci pour contact avec l'épaulement 29*a*. De même à la figure 6 la rondelle peut avoir une extrémité arrondie pour contact avec le diaphragme. Les segments 26 peuvent être rapportés sur le plateau 16. Enfin on notera que la raideur de la rondelle varie et que l'épaulement 29 peut être segmenté.

## Revendications

1 - Mécanisme d'embrayage du type comportant un couvercle (13), propre à être fixé à un plateau de réaction (12), un plateau de pression (16), mobile axialement par rapport au couvercle mais lié en rotation à celui-ci, un élément annulaire de progressivité intercalé entre un cordon d'appui (22) à contour globalement circulaire du plateau de pression (16) et un diaphragme d'actionnement (17) prenant appui sur le couvercle (13) et sur le cordon d'appui (22) du plateau de pression (16), dans lequel ledit cordon d'appui (22) est constitué d'une pluralité de segments (26), formant saillies, espacés le long dudit contour circulaire, caractérisé en ce que ledit élément annulaire de progressivité est conformé en rondelle (23) élastiquement déformable dans le sens axial et comporte des découpes (28, 28*a*) dans lesquelles sont engagés lesdits segments, qui, en position d'embrayage serré s'appuient directement sur ledit diaphragme et en ce que le plateau de pression (16) porte des moyens (29) pour stabiliser la rondelle (23).

2 - Mécanisme d'embrayage selon la revendication 1, caractérisé en ce que les moyens (29) pour stabiliser la rondelle (23) consistent en un épaulement circulaire (29) du plateau de pression (16).

3 - Mécanisme d'embrayage selon la revendication 1 ou 2, caractérisé en ce que les zones (27) de la rondelle élastiquement déformable, s'étendant entre lesdites découpes, ont sensiblement un profil en V, la pointe du V étant dirigée vers ledit diaphragme.

4 - Mécanisme d'embrayage selon la revendication 1 ou 2, caractérisé en ce que ladite rondelle élastiquement déformable (23*a*) est une rondelle Belleville munie de découpes (28*a*) précitées.

5 - Mécanisme d'embrayage selon la revendication 3 ou 4, caractérisé en ce que lesdites découpes sont des échancrures débouchant le long d'un bord circulaire de ladite rondelle élastiquement déformable (23, 23*a*).

6 - Mécanisme d'embrayage selon la revendication 5, caractérisé en ce que lesdites échancrures débouchent le long du bord circulaire interne de ladite rondelle élastiquement déformable (23, 23*a*).

7 - Mécanisme d'embrayage selon l'une des revendications précédentes, caractérisé en ce que ladite rondelle élastiquement déformable (23, 23*a*) comporte au moins une patte (32) recourbée dans la direction dudit diaphragme (19) et engagée dans une ouverture de celui-ci.

8 - Mécanisme d'embrayage selon l'une des revendications 1 à 6, caractérisé en ce que ladite rondelle élastiquement déformable comporte au moins une patte (32*a*) recourbée dans la direction dudit diaphragme (19) et engagée dans une encoche (36) du bord extérieur dudit diaphragme.

## Patentansprüche

1. Kupplungsmechanismus von der Art, die über einen Deckel (13) verfügt, der zur Anbringung an einer Gegendruckplatte (12) geeignet ist, eine Druckplatte (16), die axial im Verhältnis zum Deckel beweglich, jedoch drehbeweglich mit diesem verbunden ist, ein ringförmiges Progressivitätselement, welches zwischen einem Stützwulst (22) mit im wesentlichen kreisförmiger Kontur an der Druckplatte (16) und einer Betätigungstellerfeder (17) eingesetzt ist, die auf dem Deckel (13) und dem Stützwulst (22) der Druckplatte (16) aufliegt, wobei der genannte Stützwulst (22) aus einer Vielzahl von Segmenten (26) besteht, die Vorsprünge bilden und entlang der genannten kreisförmigen Kontur in Abständen angeordnet sind, dadurch gekennzeichnet, daß das genannte ringförmige Progressivitätselement als Scheibe (23) ausgebildet ist, die in axialer Richtung elastisch verformbar ist und über Ausschnitte (28, 28a) verfügt, in welche genannten Segmente eingreifen, die bei eingerückter Kupplungsstellung direkt auf der genannten Tellerfeder aufliegen, und daß die Druckplatte (16) Mittel (29) zur Stabilisierung der Scheibe (23) besitzt.

2. Kupplungsmechanismus nach Anspruch 1, dadurch gekennzeichnet, daß die Mittel (29) zur Stabilisierung der Scheibe (23) aus einer kreisförmigen Schulter (29) der Druckplatte (16) bestehen.

3. Kupplungsmechanismus nach Anspruch 1 oder 2, dadurch gekennzeichnet, daß die Zonen (27) der elastisch verformbaren Scheibe, die sich zwischen den genannten Ausschnitten erstrecken, im wesentlichen ein V-Profil aufweisen, wobei die Spitze des V zur genannten Tellerfeder hin gerichtet ist.

4. Kupplungsmechanismus nach Anspruch 1 oder 2, dadurch gekennzeichnet, daß die genannte, elastisch verformbare Scheibe (23a) eine Belleville-Scheibe ist, die mit den vorgenannten Ausschnitten (28a) versehen ist.

5. Kupplungsmechanismus nach Anspruch 3 oder 4, dadurch gekennzeichnet, daß die genannten Ausschnitte Aussparungen sind, die längs eines kreisförmigen Randes der genannten, elastisch verformbaren Scheibe (23, 23a) einmünden.

6. Kupplungsmechanismus nach Anspruch 5, dadurch gekennzeichnet, daß die genannten Aussparungen entlang des kreisförmigen Innenrandes der genannten, elastisch verformbaren Scheibe (23, 23a) einmünden.

7. Kupplungsmechanismus nach einem der vorherigen Ansprüche, dadurch gekennzeichnet, daß die genannte, elastisch verformbare Scheibe (23, 23a) wenigstens eine Lasche (32) aufweist, die in der Richtung der genannten Tellerfeder (17) gekrümmt ist und in einer Öffnung derselben eingreift.

8. Kupplungsmechanismus nach einem der Ansprüche 1 bis 6, dadurch gekennzeichnet, daß die genannte, elastisch verformbare Scheibe wenigstens eine Lasche (32a) aufweist, die in der Richtung der genannten Tellerfeder (17) gekrümmt ist und in einer Kerbe (36) des Außenrandes der genannten Tellerfeder eingreift.

## Claims

1. A clutch mechanism of the kind comprising a cover (13), adapted to be fastened to a reaction plate (12), a pressure plate (16) which is axially movable relative to the cover but fixed to rotate with the latter, an annular element for progressive engagement disposed between a support line (22) of overall circular contour on the pressure plate (16), and an operating diaphragm (17) bearing on the cover (13) and on the support line (22) on the pressure plate (16), in which the said support line (22) consists of a plurality of segments (26), forming projections, which are spaced along the said circular contour, characterized in that the said annular element for progressive engagement is formed as a washer (23) which is axially elastically deformable and comprises openings (28, 28a) in which the said segments are engaged, and which, when the clutch is in the engaged position, bears directly on the said diaphragm, and in that the pressure plate (16) carries means (29) for stabilizing the washer (23).

2. A clutch mechanism according to Claim 1, characterized in that the means (29) for stabilizing the washer (23) consist of a circular shoulder (29) of the pressure plate (16).

3. A clutch mechanism according to Claim 1 or 2, characterized in that the zones (27) of the elastically deformable washer extending between the said openings have a substantially V-shaped profile, the apex of the V being directed towards the said diaphragm.

4. A clutch mechanism according to Claim 1 or 2, characterized in that the said elastically deformable washer (23a) is a Belleville washer provided with the aforementioned openings (28a).

5. A clutch mechanism according to Claim 3 or 4, characterized in that the said openings are notches opening along a circular edge of the said elastically deformable washer (23, 23a).

6. A clutch mechanism according to Claim 5, characterized in that the said notches open along the inner circular edge of the said elastically deformable washer (23, 23a).

7. A clutch mechanism according to any one of the preceding claims, characterized in that the said elastically deformable washer (23, 23a) comprises at least one lug (32) bent back towards the said diaphragm (17) and engaged in an opening in the latter.

8. A clutch mechanism according to any one of Claims 1 to 6, characterized in that the said elastically deformable washer comprises at least one lug (32a) bent back towards the said diaphragm (19) and engaged in a notch (36) in the outer edge of the said diaphragm.

FIG.1

FIG.3

# FIG. 2

# FIG.4

# FIG.5

EP 0 271 382 B1

FIG.6

FIG.8

FIG.7

FIG.9